# EUROPEAN PATENT APPLICATION

(11) **EP 4 804 111 A1**
(43) Date of publication of application: **09.09.2026**
(21) Application number: 24893985.2
(22) Date of filing: 05.11.2024
(51) Int. Cl.: G06Q 50/10, G06Q 10/00

(54) **GROUP PRESENTATION SYSTEM AND GROUP PRESENTATION METHOD**

(30) Priority: 22.11.2023 JP 2023198544
(71) Applicant: ASICS Corporation, Kobe-shi, Hyogo 650-0021 (JP)
(72) Inventor: HSU, Lingyu, Kobe-shi, Hyogo 650-0021 (JP); KAMIYA, Ryo, Kobe-shi, Hyogo 650-0021 (JP); VANDERHOEVEN, Alex, London, ON N6A 1B5 (CA); UEMURA, Osamu, Kobe-shi, Hyogo 650-0021 (JP); SHIMOMURA, Koji, Kobe-shi, Hyogo 650-0021 (JP); OGAWA, Shingo, Kobe-shi, Hyogo 650-0021 (JP); SHIODE, Shigeo, Kobe-shi, Hyogo 650-0021 (JP); TAKASHIMA, Shingo, Kobe-shi, Hyogo 650-0021 (JP); HATANO, Genki, Kobe-shi, Hyogo 650-0021 (JP)
(74) Representative: TBK
(86) International application number: PCT/JP2024/039291
(87) International publication number: WO 2025/109993

(57) **Abstract**

A group presenting server 12 acquires inputs of participation registration for a race and a goal in the race, made by a participant. The group presenting server 12 stores participation registration information and participant information input by the participant. The group presenting server 12 stores the goal and a goal setting type in the race input by the participant. The group presenting server 12 stores information related to a plurality of participant groups grouped based on a goal and a goal setting type, for each race. The group presenting server 12 determines, for the participant who has input the participation registration and the goal, at least one participant group corresponding to the race for which the participation registration is performed and the goal setting type, as a recommendation group. The group presenting server 12 presents the determined recommendation group to the participant.

## Description

### TECHNICAL FIELD

The present disclosure relates to a group presenting system and a group presenting method.

### BACKGROUND ART

There is known a technique of storing training performance data of a user, extracting a training running section whose attributes are similar to attributes (for example, a height difference, a section distance, and weather) of a running course of a competition, calculating a performance difference from a running speed in the competition, in the training running section, and displaying the performance difference on a screen together with a training running section map (for example, see Patent Literature 1).

### RELATED-ART LITERATURE

### PATENT LITERATURE

Patent Literature 1: JP 2006-79183 A

### SUMMARY OF INVENTION

### TECHNICAL PROBLEM

In order to maintain and improve motivation of a participant in a race, it is considered effective to present a participant group useful for the participant.

The present disclosure has been made in view of such a situation, and a purpose thereof is to provide a technique of presenting a participant group useful for a participant in a race.

### SOLUTIONS TO PROBLEM

In order to solve the above problem, a group presenting system according to one aspect of the present disclosure includes: an input acquirer structured to acquire inputs made by a participant, the inputs being inputs of participation registration for a race and a goal in the race; a registration storage unit structured to store participation registration information that indicates participation registration for a race and participant information that identifies the participant, the participation registration information and the participant information being input by the participant and acquired by the input acquirer; a goal storage unit structured to store information related to the goal and the goal setting type in the race, input by the participant and acquired by the input acquirer; a group storage unit structured to store information related to a plurality of participant groups grouped based on a goal and a goal setting type, for each race; a recommendation determiner structured to determine, for the participant who has input the participation registration and the goal acquired by the input acquirer, at least one participant group, of the plurality of participant groups, corresponding to the race for which the participation registration is performed and the goal setting type, as a recommendation group; and a recommendation presenter structured to present the recommendation group that has been determined to the participant.

Another aspect of the present disclosure is a group presenting method. This method is a method executed by a computer structured to be able to access a registration storage unit, a goal storage unit, and a group storage unit, the method including: storing, in the registration storage unit, participation registration information that indicates participation registration for a race and participant information that identifies a participant, the participation registration information and the participant information being input by the participant; storing, in the goal storage unit, information related to a goal and a goal setting type in the race, input by the participant; storing, in the group storage unit, information related to a plurality of participant groups grouped based on a goal and a goal setting type, for each of a plurality of the races; and by the computer, executing: processing of acquiring, via a network, inputs made by a participant, the inputs being inputs of participation registration for a race and a goal in the race; processing of determining, for the participant who has input the participation registration and the goal, at least one participant group, of the plurality of participant groups, corresponding to the race for which the participation registration is performed and the goal setting type, as a recommendation group; and processing of presenting, via a network, the recommendation group that has been determined to the participant.

Note that optional combinations of the aforementioned constituting elements and those obtained by substituting constituting elements or expressions of the present disclosure with apparatuses, methods, programs, transitory or non-transitory recording mediums recording the programs, systems, or the like are also effective as aspects of the present disclosure.

### ADVANTAGEOUS EFFECTS OF INVENTION

According to the present disclosure, it is possible to present a participant group useful for a participant in a race.

### BRIEF DESCRIPTION OF DRAWINGS

[Fig. 1] Fig. 1 is a diagram showing a configuration of a group presenting system of a first embodiment.
[Fig. 2] Fig. 2 is a block diagram showing functional blocks included in a group presenting server of the first embodiment.
[Fig. 3] Fig. 3 is a flowchart showing operation of the group presenting server of the first embodiment.
[Fig. 4] Fig. 4 is a diagram showing an example of recommendation group information of the first embodiment.
[Fig. 5] Fig. 5 is a diagram showing a configuration of a group presenting system of a second embodiment.
[Fig. 6] Fig. 6 is a block diagram showing functional blocks included in a group presenting server of the second embodiment.
[Fig. 7] Fig. 7 is a diagram showing an example of recommendation group information of the second embodiment.
[Fig. 8] Fig. 8 is a block diagram showing functional blocks included in a group presenting server of a third embodiment.
[Fig. 9] Fig. 9 is a flowchart showing operation of the group presenting server of the third embodiment.

### DESCRIPTION OF EMBODIMENTS

Description will be given below with reference to the drawings on the basis of embodiments. In the embodiments and modifications, the same or equivalent constituting elements are denoted by the same reference signs, and redundant description will be omitted as appropriate.

### (First Embodiment)

Preparation and training in accordance with a goal in a race set by a user are required, in a case where the user participates in the race such as a marathon or a trail running. The goal in a race includes completing running within a time as a goal, completing running regardless of time limitation, completing running of a distance as a goal, achieving a rank equal to or higher than a predetermined rank, and the like. The race may include events such as running, walking, mountain climbing, swimming, cycling, triathlon, orienteering, rogaining, and outdoor sports, in addition to marathon and trail running.

As the user gains longer race experience, the user can somewhat smoothly perform preparation and training in accordance with a goal of the user, on the basis of the experience of the user or by developing a pattern. However, in many cases, for example, in a case where the user's race experience is short, information on another person for preparation and training is often useful as a reference.

Factors that determine the contents of preparation and training for a race include not only the goal in the race set by the user but also a goal setting type (hereinafter, also referred to as a "goal setting pattern") in the race, set by the user. The goal setting pattern may be a type of user's consciousness for a race or a goal setting, or may be a type of user's earnest degree for achievement of a goal. The goal setting pattern in the first embodiment includes a competitive mindset, current-level maintenance, and fun running. The competitive mindset is a type of serious attempt to shorten time in a race. The current-level maintenance is a type in which maintaining the current time is set as a goal. The fun running is a type in which enjoying oneself regardless of time is set as a goal. Note that the time means a time required for moving a certain distance.

In a group presenting system of the first embodiment, a participant group corresponding to a goal and a goal setting pattern in a race is provided. The group presenting system of the first embodiment determines, as a recommendation group, a participant group corresponding to a race for which the user performs participation registration or a goal setting pattern that the user has set, and presents the determined recommendation group to the user. Thus, it is possible to present a participant group useful for the user to achieve the goal, and it is possible to support maintenance and improvement of motivation of the user. Note that the group presenting system may determine, as a recommendation group, a participant group corresponding to the race for which the user performs participation registration and the goal setting pattern that the user has set. The participant in the following description is a generic term for each person who performs participation registration for a specific race, and the user means a specific person among the participants. Examples thereof include a beginner in terms of participating in a race, and a participant who has participated in a race five times or less and has little experience.

In the first embodiment, the user sets a goal on the basis of a race for which the user performs participation registration. As a modification, the user may set a goal in self-training such as running. The group presenting system may present, to the user, a race or an event corresponding to a goal in the self-training set by the user.

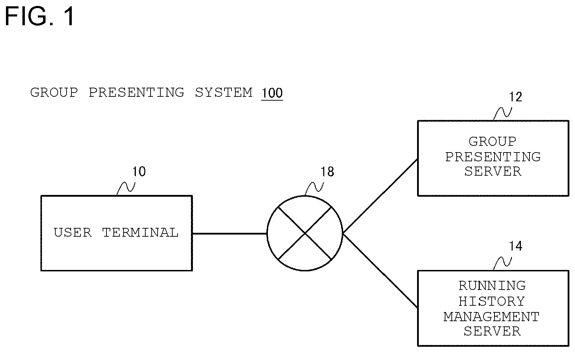

Fig. 1 shows a configuration of a group presenting system 100 of the first embodiment. The group presenting system 100 of the first embodiment includes a user terminal 10, a group presenting server 12, and a running history management server 14. The apparatuses in Fig. 1 are connected via a network 18 including a local area network (LAN), a wide area network (WAN), the Internet, and the like.

The user terminal 10 is a terminal operated by the user, and may be an information terminal such as a smartphone or a tablet terminal owned by the user, or may be a personal computer. The user terminal 10 is, for example, constituted by a combination of hardware such as a microprocessor, a touch panel, a memory, and a communication module.

The group presenting server 12 is a server computer incorporating a function of processing a participation registration procedure for a race, a function of managing a participant group, and a function of recommending the participant group to a participant who performs participation registration for the race. As a modification, the function of processing a participation registration procedure for a race may be constructed as another server different from the group presenting server 12, and the other server may be configured to be included in the group presenting system 100. In addition, the function of managing a participant group may be constructed as another server different from the group presenting server 12, and the other server may be configured to be included in the group presenting system 100.

The running history management server 14 is a server computer that stores and manages running histories of a plurality of participants. The running history is information related to running in a race or running in training, and includes information related to a date and time, a distance, a time, weather, and an area of running having been performed. The information related to weather may include information that indicates a season, climate, temperature, humidity, or the like. The information related to an area may include information that indicates a location on a map. In the first embodiment, a running history management application is installed on the information terminal (including the user terminal 10) of each participant. The running history management application causes the running history of the participant to be transmitted to the running history management server 14. The running history management server 14 stores the running history transmitted from the information terminal of each participant. The running history transmitted from the information terminal of each participant and/or the running history stored in the running history management server 14 may include a training history of a participant participating in a training event of a group. A level of the belonging group can be determined on the basis of the training history.

Each of the group presenting server 12 and the running history management server 14 may be configured with a single server computer, or may be configured by a combination of a plurality of server computers. In addition, the group presenting server 12 and the running history management server 14 may be a configuration integrated into a single server computer. The same applies to an event management server 16 to be described later.

Note that the "group presenting system" in the claims may refer to the entire group presenting system 100, or may refer to only the group presenting server 12. Alternatively, the "group presenting system" in the claims may refer to a combination of at least one of the user terminal 10 and the running history management server 14 and the group presenting server 12. Alternatively, the "group presenting system" in the claims may be implemented in a manner in which the group presenting server 12 and the user terminal 10 are provided with characteristic functions in a distributed manner.

In addition, the "participant group" in the claims includes each of both a real group that is actually organized and operated and a virtual group that is generated by grouping a plurality of participants through information processing. The group presenting server 12 of the first embodiment manages the real participant group. A group presenting server 12 of the third embodiment to be described later manages the virtual participant group.

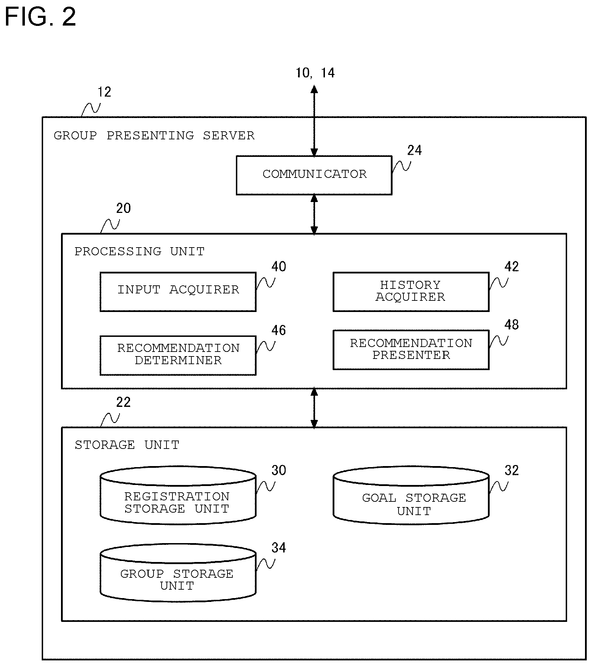

Fig. 2 is a block diagram showing functional blocks included in the group presenting server 12 of the first embodiment. Fig. 2 depicts functional blocks implemented by cooperation of various hardware configurations and software configurations, regarding the group presenting server 12. It will be understood by a person skilled in the art that each functional block can be implemented in various forms by only hardware, only software, or a combination thereof.

The group presenting server 12 is, for example, constituted by a combination of hardware such as a central processing unit (CPU), a graphics processing unit (GPU), a memory, a large-capacity storage such as a solid state drive (SSD) or a hard disk, and a communication module. These indicate that a general-purpose hardware configuration may be used as the server computer, and are not limited to these configurations. Further, the group presenting server 12 may be implemented in the form of a cloud server, which is a virtual server constructed on the Internet. Similarly, in other servers described herein, as each of these server computers, a general-purpose hardware configuration or a cloud server may be used.

The group presenting server 12 includes a processing unit 20, a storage unit 22, and a communicator 24. The processing unit 20 executes various types of information processing. The processing unit 20 may be implemented by a processor (CPU or the like) of the group presenting server 12. The storage unit 22 stores data to be referred to or updated by the processing unit 20. The storage unit 22 may be implemented by a memory or a storage of the group presenting server 12. The communicator 24 communicates with an external apparatus according to a predetermined communication protocol. The processing unit 20 transmits and receives data to and from the user terminal 10 and the running history management server 14 via the communicator 24.

The storage unit 22 includes a registration storage unit 30, a goal storage unit 32, and a group storage unit 34. The registration storage unit 30 stores participation registration information and participant information input by a participant and acquired by an input acquirer 40 to be described later. The participation registration information is information that indicates participation registration for a race, and includes information on a person who has performed participation registration for each race. In addition, the participation registration information includes information on the user who has taken a procedure for participation registration as a participant in a phase before a race is held, or information on a participant in a race held in the past.

The participant information is information that can identify a participant who has performed participation registration for a race. The participant information includes account information, personal information, information on race experience, information that indicates a competitive level, and the like of a participant. The account information of a participant is information necessary for login to the group presenting server 12, such as an ID and a password of the participant. The account information of a participant is generated on the basis of information input in an account registration procedure taken when the participant first uses the group presenting server 12. The personal information of a participant includes information such as a name, an address, and a contact information, attribute information such as age and gender, and information on a team or an organization to which the participant belongs.

The information on race experience includes information on a past participating race and recorded information such as a running completion time in each race. As the information that indicates a competitive level, running log data measured by the user using a watch having a positioning function or the running history management application of the user terminal 10 may be registered by allowing a participant to register therefor. In this case, the competitive level such as a running ability of a participant may be determined through analysis based on the running log data, and recorded.

The goal storage unit 32 stores information related to a goal and a goal setting pattern in a race input by a participant and acquired by the input acquirer 40 to be described later. The goal in the first embodiment is a time as a goal in a race for which participation registration is performed. The goal setting pattern in the first embodiment includes the competitive mindset and the fun running.

The group storage unit 34 stores information related to a plurality of participant groups (hereinafter, also referred to as "group attribute information") grouped on the basis of a goal and a goal setting pattern, for each race. The group attribute information is typically information registered by an organizer of a group. The group attribute information includes a group name, a target race, a goal, a goal setting pattern, and a target level.

The target race is a race that a group targets or aims for, that is, a race for which a member belonging to the group performs participation registration. The goal is an indication of a running completion time as a goal. For example, less than 5 hours (so-called sub 5), less than 4 hours (so-called sub 4), or less than 3.5 hours (so-called sub 3.5) may be set. For the goal setting pattern, the competitive mindset or the fun running may be set.

The target level is information that indicates an indication of a running ability of a member of a group. For the target level, categories may be set such as a beginner, a person with an elementary level, a person with an intermediate level, and a person with an advanced level. In addition, for the target level, a running distance as an indication of the running ability may be set. In the first embodiment, as an indicator value that indicates the running distance as the indication of the running ability, a monthly running distance that indicates a running distance for a month is used. As a modification, the target level may include at least one of a marathon best time, a 10-km running best time, running frequency, and an average running distance per running.

The processing unit 20 includes the input acquirer 40, a history acquirer 42, a recommendation determiner 46, and a recommendation presenter 48. The functions of the plurality of these functional blocks may be implemented in a computer program. This computer program may be installed in the storage of the group presenting server 12. The processor of the group presenting server 12 may perform the functions of the aforementioned plurality of functional blocks by reading and executing the computer program in a main memory.

The input acquirer 40 acquires inputs of participation registration for a race and a goal in the race, made by a participant (which can also be referred to as a person who desires participation). In the first embodiment, the input acquirer 40 acquires participation registration information and participant information transmitted from a terminal (including the user terminal 10) of a participant, and stores the acquired participation registration information and participant information in the registration storage unit 30. In addition, the input acquirer 40 acquires a goal and a goal setting pattern transmitted from the terminal (including the user terminal 10) of the participant, and stores the acquired goal and goal setting pattern in the goal storage unit 32.

The history acquirer 42 acquires a running history of a participant in a race, stored in the running history management server 14. The running history of a participant includes a log measured by using the running history management application of a terminal (including the user terminal 10) of the participant.

The recommendation determiner 46 determines, for a participant who has input participation registration for a race and a goal in the race, acquired by the input acquirer 40, at least one participant group corresponding to the race and the goal setting pattern, as a recommendation group.

The recommendation presenter 48 presents the recommendation group determined by the recommendation determiner 46 to a participant who has input participation registration for a race or a goal in the race. Note that the recommendation presenter 48 may present the recommendation group determined by the recommendation determiner 46 to a participant who has input participation registration for a race and a goal in the race.

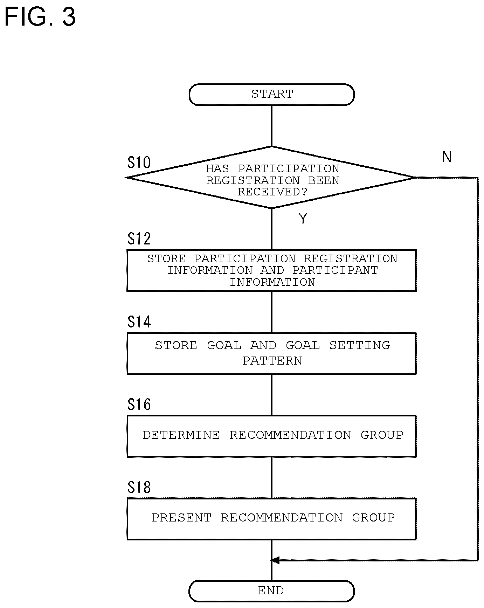

Fig. 3 is a flowchart showing operation of the group presenting server 12 of the first embodiment. In the registration storage unit 30, participation registration information and participant information input by each of a plurality of participants are stored for each race. In the goal storage unit 32, a goal and a goal setting pattern in a race input by each of a plurality of participants are stored for each race. In the group storage unit 34, predetermined group attribute information related to each of a plurality of participant groups is stored for each race. The group attribute information may be registered in the group presenting server 12 from a terminal of an organizer of a group.

Examples of a plurality of participant groups will be described. For example, a first participant group may be a group in which a goal (running completion time as a goal) is not set and the fun running is set as a goal setting pattern. A second participant group may be a group in which less than five hours is set as a goal and the fun running is set as a goal setting pattern. In addition, a third participant group may be a group in which less than four hours is set as a running completion time as a goal and the competitive mindset is set as a goal setting pattern. Further, a fourth participant group may be a group in which less than 3 hours and 30 minutes is set as a running completion time as a goal and the competitive mindset is set as a goal setting pattern.

The user terminal 10 transmits participation registration information for a race selected by the user, to the group presenting server 12, in response to an operation of the user. Specifically, the user terminal 10 transmits participation registration information and participant information for a race selected by the user to the group presenting server 12. Further, the user terminal 10 transmits a goal and a goal setting pattern in the race input by the user to the group presenting server 12.

The input acquirer 40 of the group presenting server 12 receives the participation registration information, the participant information, the goal, and the goal setting pattern transmitted from the user terminal 10 (Y in S10). The input acquirer 40 stores the participation registration information and the participant information in the registration storage unit 30 in association with the user (S12). The input acquirer 40 stores the goal and the goal setting pattern in the goal storage unit 32 in association with the user (S14).

The recommendation determiner 46 determines at least one participant group corresponding to the race for which the user has performed participation registration and the goal setting pattern of the user, as a recommendation group for the user (S16). The recommendation presenter 48 transmits, to the user terminal 10, information related to the recommendation group (hereinafter, also referred to as "recommendation group information") determined by the recommendation determiner 46 (S18). The user terminal 10 causes a display to display the recommendation group information.

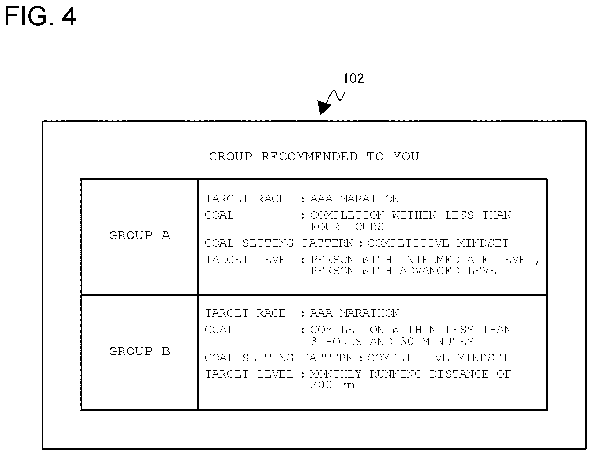

Fig. 4 shows an example of recommendation group information 102 of the first embodiment. The recommendation group information 102 in Fig. 4 is recommendation group information presented to the user who has performed participation registration for AAA Marathon and has input the competitive mindset as a goal setting pattern. In addition, the recommendation group information 102 in Fig. 4 presents, as recommendation groups, two participant groups (groups A, B) in each of which AAA Marathon is set as a target race and the competitive mindset is set as a goal setting pattern.

The recommendation determiner 46 may determine a recommendation group to be presented to the user, on the basis of the running history of the user and the target level of a participant group. For example, as will be described later, the recommendation determiner 46 may estimate the running ability of the user on the basis of the running history of the user. Specifically, the recommendation determiner 46 may check pace, endurance, and distance, on the basis of a plurality of times recorded for a plurality of past races, indicated by the running history of the user, and determine the running ability of the user. In addition, the recommendation determiner 46 may estimate transition of the running ability of the user by comparing times recorded for races of the same distance. Furthermore, the recommendation determiner 46 may estimate the running ability of the user, on the basis of training data of content (pace running, interval running, hill training, or the like) of a routine training menu and physical reaction (heart rate, stride, pace, or the like) of the user indicated by data obtained from a wearable device or a running application. Moreover, the recommendation determiner 46 may estimate a physical condition from questionnaire evaluation of user's own running comfort, fatigue feeling, or the like. In addition, the recommendation determiner 46 may analyze motion of the user on the basis of motion analysis on video shooting or motion capture, and estimate the running ability on the basis of whether efficiency is excellent or not. Further, the recommendation determiner 46 may measure an exercise physiological indicator such as maximal oxygen consumption (VO2Max), a lactate level, or a muscle strength value of physiological data, and estimate the running ability of the user. By combining the above methods, it is possible to estimate the running ability more accurately. On the other hand, for the level of a participant group, the recommendation determiner 46 may collect training data of participants in a training event, derive average pace, distance, time, or the like as a major indicator of the group, and determine the level of the participant group, on the basis of the value of the major indicator.

The recommendation determiner 46 may exclude, from recommendation groups, a participant group in which a deviation between the target level and the user's running ability is beyond a predetermined allowable range, that is, a participant group in which a target level greatly exceeding the user's running ability is set, among a plurality of participant groups. This can reduce a risk of injury to the user. For example, in a case where the user is a beginner, the recommendation determiner 46 may determine ±10% as the allowable range, and may make setting to exclude a recommendation group in the case of exceeding ±10%.

Alternatively, the recommendation determiner 46 may determine a recommendation group to the user by using a statistical correlation, as described in the following procedures 1 to 8.

Procedure 1. A plurality of pieces of running history data of the user are acquired through the input acquirer 40.

Procedure 2. Among a plurality of participant groups, participant groups each including at least one participant who has performed participation registration for the same race as that of the user and has the same goal setting pattern as that of the user are listed as candidate groups.

Procedure 3. Running histories of the participants or history data of a training event of the listed candidate groups is collected.

Procedure 4. Pace, distance, time, and the like are set as major indicators.

Procedure 5. A correlation coefficient is calculated for the major indicator for each of the running history data of the user and the running history data of the participant of the candidate group. As positive correlation is stronger, it is determined that the running abilities of the user and the group approximate each other.

Procedure 6. A threshold (allowable range) of the correlation coefficient is set, for example, when the correlation coefficient is 0.7 or greater, the group is selected as a matched recommendation group.

Procedure 7. The recommendation groups are presented to the user through the recommendation presenter 48 in descending order of the correlation coefficient.

Procedure 8. The user determines a group suitable for the user, on the basis of training frequencies of the respective groups, age segments of the participants, group features, or the like, indicated by profiles of the respective groups.

The recommendation group information 102 includes a target race for which a member of a group performs participation registration, a goal, a goal setting pattern, and a target level that are set in the group attribute information. As described above, the target level is information that indicates an indication of a running ability of a member of a group. For the target level, for example, categories such as a person with an intermediate level, a person with an advanced level, and the like, and a monthly running distance are set. Returning to Fig. 3, in a case where the participation registration information and the like transmitted from the user terminal 10 are not received (N in S10), the pieces of processing of S12 to S18 are skipped.

Note that, in a case where a specific group is selected by the user in the recommendation group information 102, the user terminal 10 may transmit a member registration request for the group selected by the user to the group presenting server 12. The group presenting server 12 may execute processing of newly registering the user in the designated group in response to the member registration request.

According to the group presenting server 12 of the first embodiment, when the user performs participation registration for a race, a participant group corresponding to the race and a goal setting pattern is presented to the user as a recommendation group. For example, the user who has input the fun running as a goal setting pattern is presented with information on a participant group that targets the same race as that of the user and in which the fun running is set as a goal setting pattern. In addition, the user who has input the competitive mindset as a goal setting pattern is presented with information on a participant group that targets the same race as that of the user and in which the competitive mindset is set as a goal setting pattern. Thus, it is possible to support maintenance and improvement of motivation of the user for a race for which the user has performed participation registration.

A specific example of the recommendation group determination in S16 in Fig. 3 will be described. The goal setting pattern here includes an upgrade and current-level maintenance. The goal setting pattern "upgrade" is a type in which one aims to achieve a goal by belonging to a participant group that exceeds one's own running ability. The goal setting pattern "current-level maintenance" is a type in which one aims to achieve a goal by belonging to a participant group that approximates one's own running ability.

The history acquirer 42 acquires a running history of the user from the running history management server 14. The recommendation determiner 46 estimates the running ability of the user on the basis of the running history of the user. Specifically, the recommendation determiner 46 calculates a monthly running distance of the user, as the running ability of the user, on the basis of each running date and time and each running distance indicated by the running history of the user. In addition, the recommendation determiner 46 categorizes the user into any of categories of a beginner, a person with an elementary level, a person with an intermediate level, and a person with an advanced level on the basis of the monthly running distance of the user, as the running ability of the user.

In a case where the goal setting pattern input by the user is the upgrade, the recommendation determiner 46 determines, as a recommendation group, a participant group to which a participant with a running ability exceeding the running ability of the user belongs. Specifically, the recommendation determiner 46 compares the estimated running ability of the user with each of the target levels of participant groups stored in the group storage unit 34, and determines, as a recommendation group, a participant group in which a target level exceeding the running ability of the user is set. Since the running ability of the user can change with a lapse of time, the recommendation determiner 46 may periodically reevaluate the recommendation group and review the recommendation group as necessary.

As a range in which motivation can be maintained while safety is ensured, an allowable range that can be recommended to a beginner and a person with an elementary level is considered to be a group that exceeds one's own running ability by about 5 to 10%. In addition, as a range in which motivation can be maintained while safety is ensured, an allowable range that can be recommended to a person with an intermediate level is considered to be a group that exceeds one's own running ability by about 10 to 15%. Since a person with an intermediate level has a certain level of physical strength, the person with the intermediate level can pursue a goal slightly higher than a goal of a person with an elementary level. In addition, an allowable range that can be recommended to a person with an advanced level is considered to be a group that exceeds one's own running ability by about 15 to 20%, as an allowable range in which motivation can be maintained toward a high goal. This is because a person with an advanced level has a considerable running ability. However, a participant group that exceeds one's own running ability by more than 20% is excluded from the recommendation group because a risk of injury increases.

For example, in a case where the monthly running distance of the user is 100 km, a participant group in which the monthly running distance as the target level is set to a value greater than 100 km may be determined as a recommendation group. However, there is a case in which it is undesirable, for the user and a member of a participant group (real group in the first embodiment) that greatly exceeds the running ability of the user, that the user participates in this participant group. Therefore, it is desirable that a deviation between the running ability of the user and a target level of the recommendation group falls within a predetermined allowable range. For example, the allowable range may be set such that a difference between monthly running distances is up to 20 km. In this case, and in a case where the monthly running distance of the user is 100 km, a participant group in which the monthly running distance as the target level is set to a value greater than 100 km and equal to or smaller than 120 km may be determined as a recommendation group.

In addition, for example, in a case where the user is categorized as a person with an elementary level, a participant group in which the target level is set to a person with an intermediate level or higher may be determined as a recommendation group. However, there is a case in which it is undesirable, for the user and a member of a participant group that greatly exceeds the running ability of the user, that the user participates in this participant group. Therefore, in a case where a log other than the monthly running distance recorded in the running history of the user satisfies a predetermined condition, even when the user is categorized as a person with an elementary level on the basis of the monthly running distance, the recommendation determiner 46 may determine, as a recommendation group, a participant group in which the target level is set to a person with an intermediate level or higher. The predetermined condition may be, for example, the fact of having completed a full marathon in less than a predetermined time (for example, less than 4 hours and 30 minutes).

In a case where the goal setting pattern input by the user is the current-level maintenance, the recommendation determiner 46 determines, as a recommendation group, a participant group to which a participant with a running ability approximating the running ability of the user belongs. The participant group to which the participant with the running ability approximating the running ability of the user belongs may be a participant group to which a participant (participant different from the user) with a running ability whose difference from the running ability of the user based on the running history of the user is within a predetermined allowable range belongs. The allowable range for the running ability approximating the running ability of the user is desirably within about ±10 seconds/km in pace. For example, in a case where average pace of the user is 5 minutes/km, a group to which a participant with average pace of 4 minutes and 50 seconds to 5 minutes and 10 seconds belongs is appropriate. This is because if the difference is 10 seconds/km or more, there is a possibility that efficiency in training decreases. An approximation range of the running distance may be within about ±20% in a total running distance in a week. For example, if the user runs 60 km per week, a group to which a participant who runs 48 km to 72 km per week belongs is appropriate. This is because if the difference exceeds 20%, there is a possibility of excessive training or insufficient training. In addition, an approximation range of a time as a goal in a race may be set to within about ±5%, as long as race categories as goals are the same. Further, an approximation range in the age segment may be set to within ±10 years old. Note that it is desirable to set the approximation range to a narrower range (for example, ±5 years old) as the age segment becomes younger, in consideration of change in physical strength with aging.

Specifically, the recommendation determiner 46 compares the estimated running ability of the user with each of the target levels of participant groups stored in the group storage unit 34, and determines, as a recommendation group, a participant group in which a target level approximating the running ability of the user is set. For example, in a case where the monthly running distance of the user is 100 km, a participant group in which the monthly running distance as the target level is set to a value of around 100 km (for example, a value in a range of 80 km to 120 km) is determined as a recommendation group. In addition, in a case where the user is categorized as a person with an elementary level, a participant group whose target level includes the person with the elementary level is determined as a recommendation group.

According to the group presenting server 12 of the first embodiment, a recommendation group conforming to a goal setting pattern input by the user can be presented to the user. For example, by presenting information on a participant group to which a participant with a running ability higher than the running ability of a user belongs, to the user who has set the goal setting pattern to the upgrade, it is possible to support maintenance and improvement of motivation of the user. In addition, by presenting information on a participant group to which a participant with a running ability equivalent to the running ability of a user belongs, to the user who has set the goal setting pattern to the current-level maintenance, it is possible to support maintenance and improvement of motivation of the user.

A modification for the first embodiment will be described. The recommendation determiner 46 of the group presenting server 12 may determine, as a recommendation group, a participant group corresponding to a goal setting pattern input by the user, among a plurality of participant groups corresponding to a race for which the user performs participation registration. The participant group corresponding to a goal setting pattern input by the user can also be said to be a participant group to which a participant who has input the same goal setting pattern as the goal setting pattern input by the user belongs. Also in this modification, by presenting information on the participant group corresponding to a goal setting pattern input by the user, to the user, it is possible to support maintenance and improvement of motivation of the user.

Other modifications for the first embodiment will be described. The group attribute information stored in the group storage unit 34 of the group presenting server 12 may include a training period (season or the like) and a training time segment. The recommendation determiner 46 of the group presenting server 12 may estimate an environment (which can also be said to be information related to weather, such as temperature and humidity) at the time of training, on the basis of the training period and time segment. The recommendation determiner 46 may detect, from among a plurality of participant groups stored in the group storage unit 34, a participant group in which an environment matching or approximating information related to weather included in the running history of the user is set as an attribute, and determine the participant group as a recommendation group. The running ability of the user may change depending on climate, weather, and the like, but, according to this aspect, it is possible to recommend a participant group in which the user easily participates in training and easily exercises one's own ability.

Further, the group presenting server 12 may store information related to a race holding period (season or the like) and a race holding time segment of each race. The recommendation determiner 46 of the group presenting server 12 may estimate an environment (which can also be said to be information related to weather, such as temperature and humidity) of a target race, on the basis of the race holding time and time segment of the target race for a participant group. The recommendation determiner 46 may detect, from among a plurality of participant groups stored in the group storage unit 34, a participant group in which a target race in an environment matching or approximating information related to weather included in the running history of the user is set, and determine the participant group as a recommendation group. The running ability of the user may change depending on climate, weather, and the like, but, according to this aspect, it is possible to recommend a participant group in which a race where the user easily exercises the user's own ability is set as a goal.

### (Second Embodiment)

A second embodiment of the present disclosure will be described focusing on differences from the first embodiment.

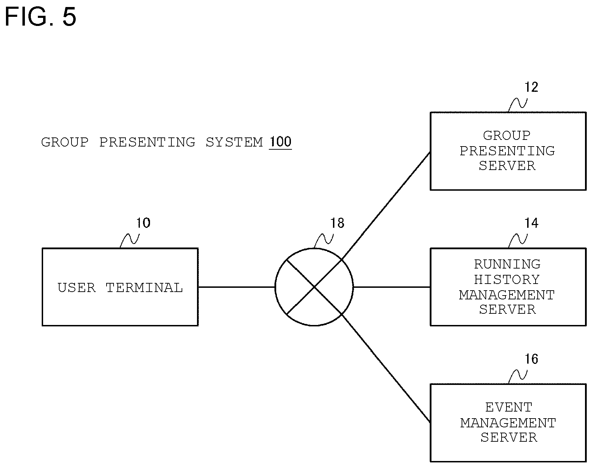

Fig. 5 shows a configuration of a group presenting system 100 of the second embodiment. The group presenting system 100 of the second embodiment further includes the event management server 16, in addition to the configuration of the first embodiment.

The event management server 16 is a server computer that stores and manages information on a plurality of events related to a race. The event management server 16 may provide a website for an event organizer to solicit participants. Note that, as a modification, a configuration may be made in which the function of the event management server 16 is included in the group presenting server 12.

Examples of the event include a training session of running, a trial run of a race course, a session of the fun running, and the like. The information on an event includes an event name, a holding date and time of the event, a venue, and target level information. The target level information is information that indicates an indication of a running ability of a person involved in the event. Similarly to the target level of a participant group in the first embodiment, the target level information includes categories such as a beginner, a person with an elementary level, a person with an intermediate level, and a person with an advanced level, and a monthly running distance.

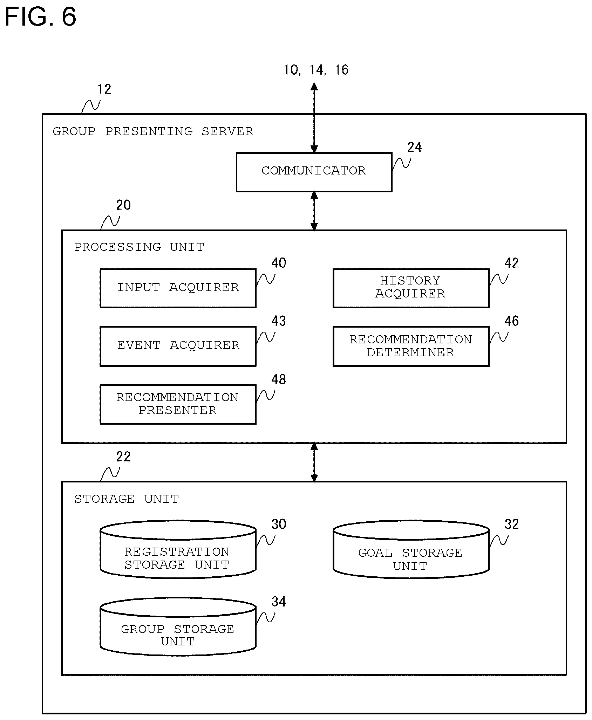

Fig. 6 is a block diagram showing functional blocks included in the group presenting server 12 of the second embodiment. The group presenting server 12 of the second embodiment further includes an event acquirer 43, in addition to the functional blocks included in the group presenting server 12 of the first embodiment.

The basic operation of the group presenting server 12 of the second embodiment is as shown in the flowchart of Fig. 3. Similarly to the group presenting server 12 of the first embodiment, the group presenting server 12 of the second embodiment presents, to the user, a participant group corresponding to a goal setting pattern of the user, as a recommendation group. In addition to this, the group presenting server 12 of the second embodiment performs the following operations.

Hereinafter, a race for which the user has performed participation registration is also referred to as a "target race". In S16 in Fig. 3, the event acquirer 43 acquires, from the event management server 16, information on a plurality of events related to a target race stored in the event management server 16. The history acquirer 42 acquires running history of the user from the running history management server 14.

The running history of the user includes information related to an area in which the user runs. The recommendation determiner 46 may estimate an area in which the user performs training running, on the basis of frequency of the running area indicated by the running history of the user. The recommendation determiner 46 identifies, from among the plurality of events acquired by the event acquirer 43, an event to be held in a place corresponding to the area indicated by the running history of the user, and determines, as a recommendation group, a group for the event (hereinafter, also referred to as an "event-related group").

For example, it is assumed that a training area of the user is identified as Tama City, Tokyo, on the basis of the running history of the user. In this case, the recommendation determiner 46 may determine, as recommendation groups, an event-related group for an event to be held at ABC Park in Tama City, Tokyo, and an event-related group for an event to be held at XYZ Athletics Stadium in Tama City, Tokyo, likewise.

In addition, the recommendation determiner 46 identifies, from among the plurality of events acquired by the event acquirer 43, an event to be held for a runner having a running ability approximating the running ability of the user, and determines, as a recommendation group, an event-related group for the event. The recommendation determiner 46 estimates the running ability of the user, on the basis of the running history of the user. Specifically, the recommendation determiner 46 calculates a monthly running distance of the user, as the running ability of the user, on the basis of each running date and time and each running distance indicated by the running history of the user. In addition, the recommendation determiner 46 categorizes the user into any of categories of a beginner, a person with an elementary level, a person with an intermediate level, and a person with an advanced level on the basis of the monthly running distance of the user, as the running ability of the user.

The recommendation determiner 46 compares the estimated running ability of the user with each of the target levels of respective events indicated by the information on the respective events, and determines, as a recommendation group, an event-related group for an event in which a target level approximating the running ability of the user is set. For example, in a case where the monthly running distance of the user is 100 km, an event-related group for an event in which the monthly running distance as the target level is set to a value of around 100 km (for example, a value in a range of 80 km to 120 km) is determined as a recommendation group. In addition, in a case where the user is categorized as a person with an elementary level, an event-related group for an event whose target level includes the person with the elementary level is determined as a recommendation group.

Note that, as the target level of the event, a time of a predetermined distance running (here, a time range of a full marathon) may be determined. In a case where the best time or the average time of the full marathon indicated by the running history of the user is included in the time range of the target level of a certain event, the recommendation determiner 46 may determine an event-related group for this event as a recommendation group.

Similarly to the first embodiment, in a case where the goal setting pattern input by the user is the upgrade, the recommendation determiner 46 may determine, as a recommendation group, an event-related group for an event in which a target level exceeding the running ability of the user is set. In addition, in a case where the goal setting pattern input by the user is the current-level maintenance, the recommendation determiner 46 may determine, as a recommendation group, an event-related group for an event in which a target level approximating the running ability of the user is set. In a case where the event-related group for the event in which the target level exceeding the running ability of the user is set is determined as a recommendation group, a deviation between the running ability of the user and the target level of the recommendation group may be reduced by providing an allowable range and a condition similar to those of the first embodiment.

The recommendation presenter 48 transmits recommendation group information to the user terminal 10. The recommendation group information of the second embodiment includes information on a participant group determined as a recommendation group and information on an event-related group determined as a recommendation group.

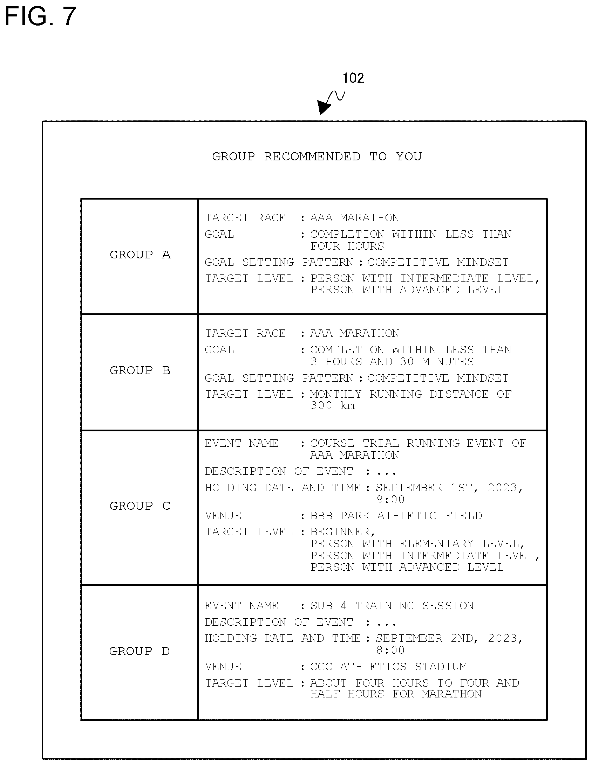

Fig. 7 shows an example of recommendation group information 102 of the second embodiment. Similarly to the first embodiment, the recommendation group information 102 of the second embodiment includes information on recommendation groups (groups A, B in Fig. 7) determined from among participant groups. The recommendation group information of the second embodiment further includes information on recommendation groups (groups C, D in Fig. 7) determined from among event-related groups. The information on the recommendation group determined from among event-related groups includes an event name, description of the event, a holding date and time of the event, a venue, and a target level.

Similarly to the group presenting server 12 of the first embodiment, the group presenting server 12 of the second embodiment also presents a group useful for the user who performs participation registration for a race, whereby it is possible to support maintenance and improvement of motivation of the user. Specifically, according to the group presenting server 12 of the second embodiment, it is possible to present, to the user, a group for an event that the user can easily participate in from the viewpoint of an area. In addition, according to the group presenting server 12 of the second embodiment, it is possible to present, to the user, a group for an event that the user can easily participate in from the viewpoint of running ability.

A modification for the second embodiment will be described. The group presenting server 12 of the second embodiment presents, to the user, both a recommendation group determined from among a plurality of participant groups and a recommendation group determined from among a plurality of event-related groups. As a modification, the group presenting server 12 may determine a recommendation group from among a plurality of event-related groups, but meanwhile, the group presenting server 12 may skip processing of determining a recommendation group from among a plurality of participant groups. That is, the group presenting server 12 may simply present, to the user, a recommendation group determined from among a plurality of event-related groups.

### (Third Embodiment)

A third embodiment of the present disclosure will be described focusing on differences from the first embodiment. A configuration of a group presenting system 100 of the third embodiment is the same as the configuration of the group presenting system 100 of the first embodiment shown in Fig. 1. However, the group presenting server 12 of the third embodiment is different from the group presenting server 12 of the first embodiment in managing a virtual participant group. In addition, the group presenting server 12 of the third embodiment is different from the group presenting server 12 of the first embodiment in that the group presenting server 12 of the third embodiment has a community function in a group.

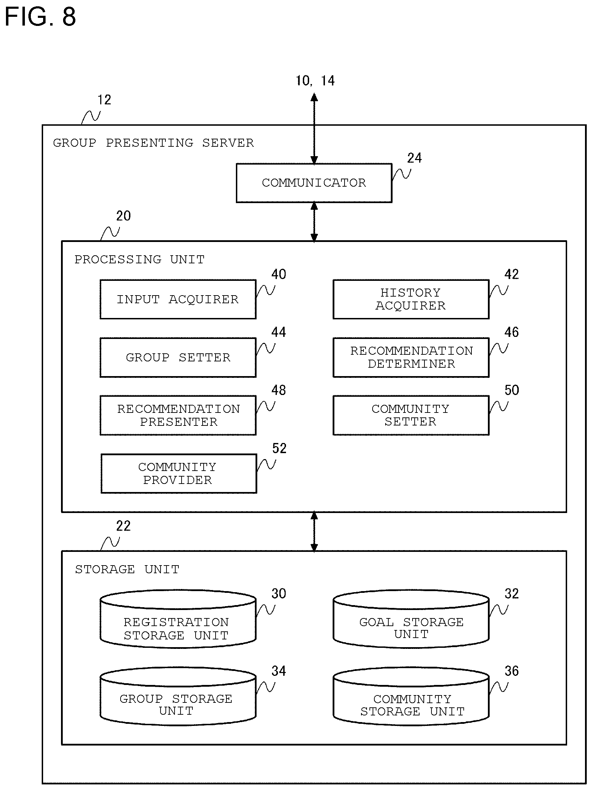

Fig. 8 is a block diagram showing functional blocks included in the group presenting server 12 of the third embodiment. The group presenting server 12 of the third embodiment further includes a group setter 44, a community setter 50, a community provider 52, and a community storage unit 36, in addition to the functional blocks included in the group presenting server 12 of the first embodiment.

The participant group of the third embodiment is a virtual group of a plurality of participants having approximate goals and the same goal setting pattern. Information related to a participant group stored in the group storage unit 34 includes a target race and information related to a belonging participant. For example, the information related to a participant group includes a goal and a goal setting pattern in a race input by a belonging participant. In addition, the information related to a participant group includes running histories of respective belonging participants acquired by the history acquirer 42.

Approximation of goals may mean that a difference in running completion times as goals in a race is equal to or smaller than a predetermined value. For example, a plurality of participant groups in which a target race is set as AAA Marathon may include the following first to fourth participant groups. The first participant group is a group to which a participant whose running completion time as a goal is not set and who has input the fun running as a goal setting pattern belongs. The second participant group is a group to which a participant who has input less than five hours (so-called sub 5) as a running completion time as a goal and has input the fun running as a goal setting pattern belongs.

The third participant group is a group to which a participant who has input less than four hours (so-called sub 4) as a running completion time as a goal and has input the competitive mindset as a goal setting pattern belongs. The fourth participant group is a group to which a participant who has input less than 3 hours and 30 minutes (so-called sub 3.5) as a running completion time as a goal and has input the competitive mindset as a goal setting pattern belongs.

The history acquirer 42 acquires running histories of a plurality of participants who have performed participation registration for a race, stored in the running history management server 14. The history acquirer 42 stores the running histories of the respective participants in the group storage unit 34, in association with the plurality of respective grouped participants, stored in the group storage unit 34.

The group setter 44 groups a plurality of participants stored in the registration storage unit 30 into a plurality of participant groups, for each race, on the basis of goals and goal setting patterns of respective participants, stored in the goal storage unit 32. In other words, the group setter 44 groups, on the basis of goals and goal setting patterns of respective participants for a certain race, the respective participants into any of a plurality of participant groups corresponding to the race, whereby the group setter 44 sets a plurality of virtual participant groups (for example, the first to fourth participant groups described above) related to the race. The group setter 44 stores information related to the plurality of participant groups in the group storage unit 34.

The community storage unit 36 stores information related to a community area that is an area in which participants perform dialogue, interaction, information exchange, and the like on a computer network, in each participant group. The community area can be referred to as an electronic information exchange area, and a chat area. In a case where a participant group is set by the group setter 44, the community setter 50 stores the information related to a community area corresponding to the participant group in the community storage unit 36.

The community area corresponding to one participant group is a community area in which only members of this participant group can post information. The viewing of the community area corresponding to one participant group is not limited to the members of this participant group, and members of other participant groups are also allowed to view the community area. The community area corresponding to one participant group may be implemented as a web page (hereinafter, also referred to as a "community page"). In a case where the community page is provided to one participant, the community provider 52 provides a community page corresponding to a participant group to which this participant belongs, by using a known access control method. The information related to a community area stored in the community storage unit 36 may include data of a community page, information related to an access-permitted participant, text or an image exchanged in a chat between participants, and information related to an electronic bulletin board on which the text or the image is displayed.

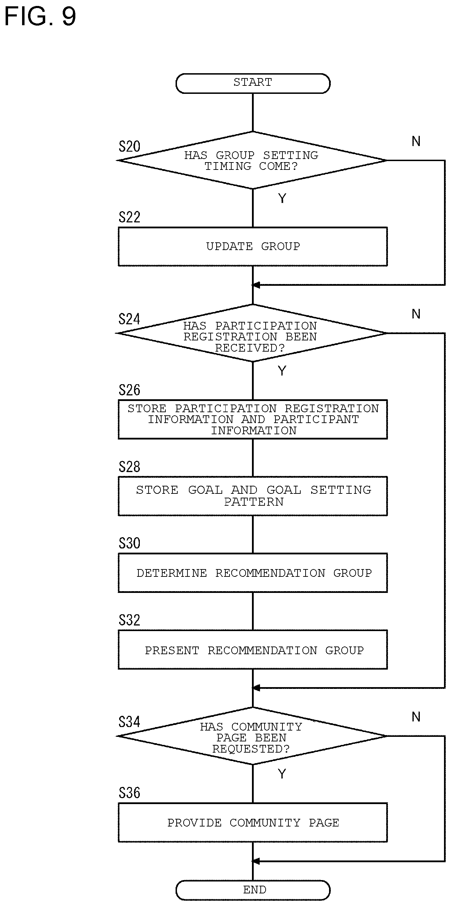

Fig. 9 is a flowchart showing operation of the group presenting server 12 of the third embodiment. The group setter 44 detects that a predetermined group setting timing has come (Y in S20). The group setter 44 refers to pieces of participation registration information and pieces of participant information of respective participants stored in the registration storage unit 30 and goals and goal setting patterns of the respective participants stored in the goal storage unit 32 to set a plurality of participant groups, for each race. In addition, the group setter 44 updates the participants belonging to each participant group (S22). In a case where it is not detected that the group setting timing has come (N in S20), the processing of S22 is skipped.

In S22, the group setter 44 groups participants who have input the same or similar goals and have input the same or similar goal setting patterns into the same group. For example, the group setter 44 may group, into the first participant group, a plurality of participants whose running completion times as goals in AAA Marathon are not set and who have input the fun running as goal setting patterns. In addition, the group setter 44 may group, into the second participant group, a plurality of participants who have input less than five hours as running completion times as goals in AAA Marathon and have input the fun running as goal setting patterns.

Moreover, the group setter 44 may group, into the third participant group, a plurality of participants who have input less than four hours as running completion times as goals in AAA Marathon and have input the competitive mindset as goal setting patterns. Further, the group setter 44 may group, into the fourth participant group, a plurality of participants who have input less than 3 hours and 30 minutes as running completion times as goals in AAA Marathon and have input the competitive mindset as goal setting patterns.

Further, the group setter 44 may group, into a fifth participant group, a plurality of participants who have approximate goals and the same goal setting pattern and whose usual running areas are near each other. The group setter 44 may refer to running histories of respective participants acquired by the history acquirer 42, and identify, as the plurality of participants whose usual running areas are near each other, a plurality of participants whose most frequent running areas indicated by the running histories are in the same prefecture or the same municipality.

Further, the group setter 44 may group, into a sixth participant group, a plurality of participants who have approximate goals and the same goal setting pattern and whose monthly running distances approximate each other. The group setter 44 may refer to running histories of respective participants acquired by the history acquirer 42, and identify, as the plurality of participants whose monthly running distances approximate each other, a plurality of participants whose monthly running distances indicated by the running histories belong to the same category. The group setter 44 may calculate the monthly running distance on the basis of the running distance of each running indicated by the running history. The category is a category for each predetermined monthly running distance. For example, a first category may be defined as less than 10 km, a second category may be defined as 10 km or more and less than 20 km, and a third category may be defined as 20 km or more and less than 40 km.

The group setter 44 stores information related to a plurality of participant groups in the group storage unit 34. The information related to a participant group includes a target level similarly to the first embodiment. The group setter 44 calculates, on the basis of running histories of a plurality of participants belonging to one participant group, acquired by the history acquirer 42, monthly running distances of the plurality of participants. The group setter 44 determines, on the basis of the monthly running distances of the plurality of participants, a target level of the participant group, as an indication of running ability. The target level of a participant group may be a monthly running distance (for example, a monthly running distance of 100 km or the like) in the participant group. Further, the target level of a participant group may be a category of a beginner, a person with an elementary level, a person with an intermediate level, or a person with an advanced level, based on the monthly running distance in the participant group.

Since the respective pieces of processing of S24 to S32 in Fig. 9 are the same as the respective pieces of processing of S10 to S18 in Fig. 3 described in the first embodiment, the description thereof will be omitted. For example, in S30, similarly to S16 in Fig. 3, the recommendation determiner 46 determines at least one participant group corresponding to a race for which the user has performed participation registration and a goal setting pattern of the user, as a recommendation group for the user, from among a plurality of virtual participant groups set by the group setter 44. In S32, the recommendation presenter 48 provides the user terminal 10 with the recommendation group information 102 as shown in Fig. 4.

Regarding S30 in Fig. 9, similarly to the first embodiment, in a case where the goal setting pattern input by the user is the upgrade, the recommendation determiner 46 determines, as a recommendation group, a participant group to which a participant with a running ability exceeding the running ability of the user belongs. In addition, in a case where the goal setting pattern input by the user is the current-level maintenance, the recommendation determiner 46 determines, as a recommendation group, a participant group to which a participant with a running ability approximating the running ability of the user belongs.

As described above, the participant group of the third embodiment is a virtual group. Thus, it can be said that the problem is minor even if the user participates in a participant group that greatly exceeds the running ability of the user. Therefore, for example, in a case where a goal setting pattern input by the user is the upgrade and the monthly running distance of the user is 100 km, a participant group in which the monthly running distance as the target level is set to a value greater than 100 km may be determined as a recommendation group. Even in a case where an allowable range for a deviation between the running ability of the user and the target level of a recommendation group is provided, the allowable range may be set to be larger than the allowable range in the first embodiment. In addition, in a case where a goal setting pattern input by the user is the upgrade and the user is categorized as a person with an elementary level, a participant group in which the target level is set to a person with an intermediate level or higher may be determined as a recommendation group, without setting any condition.

The user who has been presented with one or more recommendation groups in the recommendation group information 102 selects a participant group that the user participates in, from among the one or more recommendation groups. The user terminal 10 transmits information on the participant group that the user participates in, to the group presenting server 12, in response to an operation of the user. The group setter 44 of the group presenting server 12 executes processing of adding the user to a member of the participant group selected by the user, for example, processing of updating member information of this participant group stored in the group storage unit 34.

The community provider 52 provides a community area for each participant group. In the third embodiment, a community page corresponding to each participant group is transmitted to terminals of participants of the participant group.

For example, the user terminal 10 transmits data requesting a community page, to the group presenting server 12, in response to an operation of the user. In a case where the request for the community page is received (Y in S34), the community provider 52 refers to the group storage unit 34, and identifies a participant group to which the user belongs. The community provider 52 transmits, to the user terminal 10, a community page corresponding to the participant group to which the user belongs, stored in the community storage unit 36 (S36). The user terminal 10 causes the display to display the community page transmitted from the group presenting server 12. In a case where the request for the community page is not received from the user terminal 10 (N in S34), the processing of S36 is skipped.

As described above, the user can also view a community page of a participant group different from the participant group to which the user belongs. For example, the user can refer to the target levels of a plurality of participant groups, view a community page of a participant group to which a person with a running ability higher than the running ability of the user belongs, and use the community page as a reference for training.

Content of the community page will be described. The history acquirer 42 acquires running histories of respective participants of each participant group from the running history management server 14. The community provider 52 presents, in the community page of each participant group, a ranking in accordance with a predetermined criterion based on running histories of a plurality of participants belonging to the participant group. For example, the community provider 52 may arrange, in a community page of one participant group, an image of a ranking in which running distances (for example, monthly running distances) of respective participants belonging to this participant group are arranged in descending order.

In addition, the community page of each participant group is configured such that participants belonging to the participant group are allowed to share running histories. In other words, in the community page of one participant group, sharing of a running history of a participant belonging to another participant group is restricted, that is, prohibited. For example, it is assumed that the user belongs to a participant group A. The user terminal 10 transmits an intention of acceptance of sharing of a running history in a community page, to the group presenting server 12, in response to an operation of the user. In a case where the intention of the acceptance of the sharing of the running history is input from the user terminal 10, the community provider 52 sets text or an image that indicates the running history of the user acquired by the history acquirer 42, to the community page of the participant group A.

According to the group presenting server 12 of the third embodiment, it is possible to promote communication in a participant group, and it is possible to allow participants belonging to the participant group to mutually increase competitive consciousness and it is possible to support maintenance and improvement of motivation of the participants. In addition, the sharing of a running history of one participant is restricted to the participant group to which this participant belongs. Thus, it is easy to find useful information by using the target level of each participant group as a clue.

A running attribute of a participant shared in the community page may include a running log in each of past races or trainings. The running log may include a running date and time, a running location, running pace, and a running speed. The running location may be, for example, an image showing a trajectory of a running location on a map. The running pace may be, for example, transition of a running time for 1 km.

In addition, the content of the community page may include a virtual challenge. Each member of a participant group may record running performance of the member in a timely manner, in the virtual challenge. Alternatively, the running performance of each member, registered in the running history management server 14 may be automatically reflected in the virtual challenge. Thus, it is possible to support members of the participant group to compete for speed, running distance, running frequency, or the like, and it is possible to support maintenance and improvement of motivation of each member.

The group presenting server 12 presents the recommendation group information 102 to the user when the user performs participation registration for a race. In a case where aiming for sub 3.5 in the race, the user may participate in a group to which a person who has already achieved the sub 3.5 or a participant who also aims for the sub 3.5 belongs, from among groups presented in the recommendation group information 102. The group presenting server 12 presents the user with a community page that is a community page of a group that the user has participated in, and that is a community page including a running log of a member of the group. Thus, it is possible to support the user to improve user's own training content by using a running log of another person as a reference. In addition, it is possible to support maintenance and improvement of motivation of the user by inspiring the user.

The embodiments have been described above. It will be understood by a person skilled in the art that this embodiment is illustrative, that various modifications can be made for combinations of the constituting elements and the processing processes thereof, and that such modifications are also within the scope.

Optional combinations of the plurality of embodiments and modifications described above are also effective as embodiments of the present disclosure. For example, a combination of the second embodiment and the third embodiment is also possible. A new embodiment resulting from any of combinations has both the respective effects of combined ones of the embodiments and modifications. Further, it will be understood by a person skilled in the art that the functions to be achieved by the constituent features described in the claims are implemented by each constituting element by itself or cooperation thereof described in the embodiments and modifications.

The following aspects are derived when the embodiments and the modifications described above are generalized.

A group presenting system according to a first aspect includes: an input acquirer structured to acquire inputs made by a participant, the inputs being inputs of participation registration for a race and a goal in the race; a registration storage unit structured to store participation registration information that indicates participation registration for a race and participant information that identifies the participant, the participation registration information and the participant information being input by the participant and acquired by the input acquirer; a goal storage unit structured to store information related to the goal and the goal setting type in the race, input by the participant and acquired by the input acquirer; a group storage unit structured to store information related to a plurality of participant groups grouped based on a goal and a goal setting type, for each race; a recommendation determiner structured to determine, for the participant who has input the participation registration and the goal acquired by the input acquirer, at least one participant group, of the plurality of participant groups, corresponding to the race for which the participation registration is performed and the goal setting type, as a recommendation group; and a recommendation presenter structured to present the recommendation group that has been determined to the participant.

According to this aspect, the participant group corresponding to the race that the participant participates in and the goal setting type is presented to the participant as the recommendation group. Thus, it is possible to support maintenance and improvement of motivation of the participant.

A group presenting system according to a second aspect may further include a history acquirer structured to acquire a running history of the participant, in the group presenting system according to the first aspect. In a case where the goal setting type of the participant who has input the participation registration and the goal is a type in which the participant aims to achieve the goal by belonging to a participant group, of the plurality of participant groups, that exceeds a running ability of the participant, the recommendation determiner may determine, as the recommendation group, the participant group to which a participant with a running ability exceeding the running ability of the participant belongs, based on the running history that has been acquired.

According to this aspect, it is possible to support the participant to find another person with a running ability higher than the running ability of the participant and learn from the other person as a reference.

A group presenting system according to a third aspect may further include a history acquirer structured to acquire a running history of the participant, in the group presenting system according to the first or second aspect. In a case where the goal setting type of the participant who has input the participation registration and the goal is a type in which the participant aims to achieve the goal by belonging to a participant group, of the plurality of participant groups, that approximates a running ability of the participant, the recommendation determiner may determine, as the recommendation group, a participant group, of the plurality of participant groups, in which a difference from the running ability of the participant is within a predetermined range, based on the running history that has been acquired.

According to this aspect, it is possible to support the participant to find another person with a running ability equivalent to the running ability of the participant and learn from the other person as a reference.

A group presenting system according to a fourth aspect may further include a history acquirer structured to acquire a running history of the participant, in the group presenting system according to any one of the first to third aspects. The recommendation determiner may determine, as the recommendation group, a group for an event to be held in a place corresponding to an area indicated by the running history of the participant who has input the participation registration and the goal, based on the running history that has been acquired.

According to this aspect, it is possible to present, to the participant, the group for an event that the participant can easily participate in from the viewpoint of an area.

A group presenting system according to a fifth aspect may further include a history acquirer structured to acquire a running history of the participant, in the group presenting system according to any one of the first to fourth aspects. The recommendation determiner may determine, as the recommendation group, a group for an event to be held for a runner with a running ability approximating a running ability of the participant who has input the participation registration and the goal, based on the running history that has been acquired.

According to this aspect, it is possible to present, to the participant, the group for an event that the participant can easily participate in from the viewpoint of the running ability.

A group presenting system according to a sixth aspect may further include a community provider structured to provide a community area that is an area in which a plurality of the participants perform dialogue in each of the plurality of participant groups, in the group presenting system according to any one of the first to fifth aspects. The community provider may present, in a community area of one participant group of the plurality of participant groups, a ranking in accordance with a predetermined criterion based on running histories of a plurality of the participants belonging to the one participant group.

According to this aspect, it is possible to promote communication in the participant group, and it is possible to allow the participants belonging to the participant group to mutually increase competitive consciousness and it is possible to support maintenance and improvement of motivation of the participants.

A group presenting system according to a seventh aspect may further include a community provider structured to provide a community area that is an area in which a plurality of the participants perform dialogue in each of the plurality of participant groups, in the group presenting system according to any one of the first to sixth aspects. In a community area of one participant group of the plurality of participant groups, a plurality of the participants belonging to the one participant group may be allowed to share a running history.

According to this aspect, it is possible to promote communication in the participant group, and it is possible to allow the participants belonging to the participant group to mutually increase competitive consciousness and it is possible to support maintenance and improvement of motivation of the participants.

A group presenting method according to an eighth aspect includes: a process of acquiring, via a network, inputs made by a participant, the inputs being inputs of participation registration for a race and a goal in the race; a process of reading information from an area in which participation registration information that indicates participation registration for a race and participant information that identifies the participant are stored, the participation registration information and the participant information being input by the participant; a process of reading information from an area in which information related to a goal and a goal setting type in the race, input by the participant is stored; a process of reading information from an area in which information related to a plurality of participant groups grouped based on a goal and a goal setting type, for each race is stored; a process of determining, for the participant who has input the participation registration and the goal, at least one participant group, of the plurality of participant groups, corresponding to the race for which the participation registration is performed and the goal setting type, as a recommendation group; and a process of presenting, via a network, the recommendation group that has been determined to the participant.

According to this aspect, the participant group corresponding to the race that the participant participates in and the goal setting type is presented to the participant as the recommendation group. Thus, it is possible to support maintenance and improvement of motivation of the participant.

A group presenting system according to a ninth aspect includes: a processor structured to receive participation registration information including information that identifies a participant who desires participation in a race and information related to a goal in a race; a registration storage unit structured to store the participation registration information received by the processor; a goal storage unit structured to store information related to a goal and a goal setting type in a race; and a group storage unit structured to store information on a plurality of participant groups grouped based on a goal and a goal setting type, for each race. The processor is structured to: determine, as a recommendation group for a participant who desires participation, at least one participant group, of the plurality of participant groups, corresponding to a race and a goal setting type identified by the participation registration information; and present the recommendation group that has been determined to a participant who desires participation.

According to this aspect, the participant group corresponding to the race that the participant participates in and the goal setting type is presented to the participant as the recommendation group. Thus, it is possible to support maintenance and improvement of motivation of the participant.

### INDUSTRIAL APPLICABILITY

The technique of the present disclosure is applicable to an information processing apparatus and an information processing system.

### REFERENCE SIGNS LIST

12 group presenting server, 14 running history management server, 30 registration storage unit, 32 goal storage unit, 34 group storage unit, 40 input acquirer, 42 history acquirer, 43 event acquirer, 46 recommendation determiner, 48 recommendation presenter, 52 community provider, 100 group presenting system

## Claims

1. A group presenting system comprising:
an input acquirer structured to acquire inputs made by a participant, the inputs being inputs of participation registration for a race and a goal and a goal setting type in the race;
a registration storage unit structured to store participation registration information that indicates participation registration for a race and participant information that identifies the participant, the participation registration information and the participant information being input by the participant and acquired by the input acquirer;
a goal storage unit structured to store information related to the goal and the goal setting type in the race, input by the participant and acquired by the input acquirer;
a group storage unit structured to store information related to a plurality of participant groups grouped based on a goal and a goal setting type, for each race input by the participant;
a recommendation determiner structured to determine, for the participant who has input the participation registration and the goal acquired by the input acquirer, at least one participant group, of the plurality of participant groups, corresponding to the race for which the participation registration is performed and the goal setting type, as a recommendation group; and
a recommendation presenter structured to present the recommendation group that has been determined to the participant.

2. The group presenting system according to claim 1, further comprising a history acquirer structured to acquire a running history of the participant,
wherein in a case where the goal setting type of the participant who has input the participation registration and the goal is a type in which the participant aims to achieve the goal by belonging to a participant group, of the plurality of participant groups, that exceeds a running ability of the participant, the recommendation determiner determines, as the recommendation group, the participant group that exceeds the running ability of the participant, based on the running history that has been acquired.

3. The group presenting system according to claim 1, further comprising a history acquirer structured to acquire a running history of the participant,
wherein in a case where the goal setting type of the participant who has input the participation registration and the goal is a type in which the participant aims to achieve the goal by belonging to a participant group, of the plurality of participant groups, that approximates a running ability of the participant, the recommendation determiner determines, as the recommendation group, a participant group, of the plurality of participant groups, in which a difference from the running ability of the participant is within a predetermined range, based on the running history that has been acquired.

4. The group presenting system according to claim 1, further comprising a history acquirer structured to acquire a running history of the participant,
wherein the recommendation determiner determines, as the recommendation group, a group for an event to be held in a place corresponding to an area indicated by the running history of the participant who has input the participation registration and the goal, based on the running history that has been acquired.

5. The group presenting system according to claim 1, further comprising a history acquirer structured to acquire a running history of the participant,
wherein the recommendation determiner determines, as the recommendation group, a group for an event to be held for a runner with a running ability approximating a running ability of the participant who has input the participation registration and the goal, based on the running history that has been acquired.

6. The group presenting system according to any one of claims 1 to 5, further comprising a community provider structured to provide a community area that is an area in which a plurality of the participants perform dialogue in each of the plurality of participant groups,
wherein the community provider presents, in a community area of one participant group of the plurality of participant groups, a ranking in accordance with a predetermined criterion based on running histories of a plurality of the participants belonging to the one participant group.

7. The group presenting system according to any one of claims 1 to 5, further comprising a community provider structured to provide a community area that is an area in which a plurality of the participants perform dialogue in each of the plurality of participant groups,
wherein in a community area of one participant group of the plurality of participant groups, a plurality of the participants belonging to the one participant group are allowed to share a running history.

8. A group presenting method, executed by a computer structured to be able to access a registration storage unit, a goal storage unit, and a group storage unit, the method comprising:
storing, in the registration storage unit, participation registration information that indicates participation registration for a race and participant information that identifies a participant, the participation registration information and the participant information being input by the participant;
storing, in the goal storage unit, information related to a goal and a goal setting type in the race, input by the participant;
storing, in the group storage unit, information related to a plurality of participant groups grouped based on a goal and a goal setting type, for each of a plurality of the races; and
by the computer, executing:
processing of acquiring, via a network, inputs made by a participant, the inputs being inputs of participation registration for a race and a goal in the race;
processing of determining, for the participant who has input the participation registration and the goal, at least one participant group, of the plurality of participant groups, corresponding to the race for which the participation registration is performed and the goal setting type, as a recommendation group; and
processing of presenting, via a network, the recommendation group that has been determined to the participant.

9. A group presenting system comprising:
a processor structured to receive participation registration information including information that identifies a participant who desires participation in a race and information related to a goal in a race;
a registration storage unit structured to store the participation registration information received by the processor;
a goal storage unit structured to store information related to a goal and a goal setting type in a race; and
a group storage unit structured to store information on a plurality of participant groups grouped based on a goal and a goal setting type, for each race,
wherein the processor is structured to:
determine, as a recommendation group for a participant who desires participation, at least one participant group, of the plurality of participant groups, corresponding to a race and a goal setting type identified by the participation registration information; and
present the recommendation group that has been determined to a participant who desires participation.
